# EUROPEAN PATENT APPLICATION

(11) **EP 4 481 894 A2**
(43) Date of publication of application: **25.12.2024**
(21) Application number: 24179334.8
(22) Date of filing: 31.05.2024
(51) Int. Cl.: H01M 10/653, H01M 10/658, H01M 50/293

(54) **BATTERY MODULE, MANUFACTURING METHOD THEREOF, AND BATTERY PACK COMPRISING THE BATTERY MODULE**

(30) Priority: 19.06.2023 KR 20230078077
(71) Applicant: Samsung SDI Co., Ltd., Yongin-si, Gyeonggi-do 17084 (KR)
(72) Inventor: Yang, Seung Yong, 17084 Yongin-si, Gyeonggi-do (KR); Woo, Myung Heui, 17084 Yongin-si, Gyeonggi-do (KR); Ryu, Bo Kyung, 17084 Yongin-si, Gyeonggi-do (KR); Ra, Ha Na, 17084 Yongin-si, Gyeonggi-do (KR); Lee, Jae Hyun, 17084 Yongin-si, Gyeonggi-do (KR); Park, Hye Jin, 17084 Yongin-si, Gyeonggi-do (KR)
(74) Representative: Gulde & Partner

(57) **Abstract**

Disclosed are a battery module including a plurality of cells and an insulation member provided between the plurality of cells, the insulation member having an upper surface and a lower surface disposed so as to face cells adjacent thereto, respectively. The insulation member comprises a first insulation sheet, a second insulation sheet, and an expansion layer formed between the first insulation sheet and the second insulation sheet. Further disclosed are a method of manufacturing a battery module, and a battery pack including a battery module.

## Description

### BACKGROUND

### 1. Field

Aspects of the disclosure relate to a battery module, a method of manufacturing the same, and a battery pack including the battery module.

### 2. Description of the Related Art

A secondary battery is a power storage system that converts electrical energy into chemical energy, stores the chemical energy, and provides high energy density. Compared to a primary battery, which is not rechargeable, a secondary battery is typically rechargeable and is widely used in information technology (IT) devices such as, e.g., smartphones, cellular phones, laptop computers, tablet computers, and the like. There is currently an increased interest in electric vehicles to reduce or prevent environmental pollution, and a high-capacity secondary batteries are often adopted in electric vehicles. Secondary batteries typically exhibit desirable characteristics such as, e.g., high density, high output, and stability.

When a plurality of high-capacity cells is included, as in a lithium secondary battery, one cell may overheat and may go into thermal runaway for various reasons, which may adversely affect other cells adjacent thereto, and therefore it is desirable to thermally isolate neighboring cells from each other.

Conventionally, a plate or an insulating resin sheet is located between cells to isolate and insulate neighboring cells from each other.

### SUMMARY

The present disclosure provides a battery module having desired, advantageous or improved thermal insulation, fire resistance, and flame retardancy or non-flammability to reduce or inhibit propagation of heat in a cell to cells adjacent thereto due to thermal runaway of the cell, a method of manufacturing the same, and a battery pack including the battery module.

A first aspect of the disclosure relates to a battery module including a plurality of cells and an insulation member between the plurality of cells, the insulation member having an upper surface and a lower surface disposed so as to face cells adjacent thereto, respectively, wherein the insulation member includes a first insulation sheet, a second insulation sheet, and an expansion layer between the first insulation sheet and the second insulation sheet.

Each, or one or more, of the cells may be a secondary battery cell.

Each, or one or more, of the first insulation sheet and the second insulation sheet may include a substrate and an aerogel layer formed on the substrate.

The substrates of the first insulation sheet and the second insulation sheet may face the cells adjacent thereto, and the aerogel layer may face the expansion layer.

Each, or one or more, of the substrates of the first insulation sheet and the second insulation sheet may be made of or comprise or consist of at least one of a resin, a metal, an inorganic material other than the metal.

Each, or one of more, of the aerogel layers of the first insulation sheet and the second insulation sheet may include an aerogel, a fibrous support, and a functional material including a binder, a dispersant, or a combination thereof.

The aerogel may have a BET specific surface area in a range of about 500 m²/g to 1,000 m²/g. The BET specific surface area is determined by the ISO 9277 standard for calculating the specific surface area of solids. BET refers to Brunauer, Emmett and Teller, the inventors of BET theory, which is the basis for calculating the BET specific surface area according to ISO 9277 standard.

The fibrous support may be or comprise at least one of natural fiber, silica fiber, glass fiber, carbon fiber, graphite fiber, mineral fiber, and polymer fiber.

The binder may include an aqueous polymer binder.

The dispersant may be or include at least one of a surfactant, a silane coupling agent, and a phosphate-based salt.

The aerogel may be included so as to account for a range of about 10 wt% to 90 wt%, the fibrous support may be included so as to account for a range of about 5 wt% to 70 wt%, and the functional material may be included so as to account for a range of about 0.5 wt% to 20 wt%, based on the total amount of the aerogel layer. In other words, the aerogel layers of the first insulation sheet and the second insulation sheet may comprise 10 wt% to 90 wt% of the aerogel, 5 wt% to 70 wt% of the fibrous support, and 0.5 wt% to 20 wt% of the functional material based on the total amount of the aerogel layer. Preferably, the aerogel layers of the first insulation sheet and the second insulation sheet may comprise 40 wt% to 60 wt% of the aerogel, 30 wt% to 50 wt% of the fibrous support, and 5 wt% to 15 wt% of the functional material based on the total amount of the aerogel layer.

The expansion layer may be or may comprise or may consist of at least one of a foam material configured to foam when the ambient temperature increases to a range of about 100 °C to 200 °C and a flame retardant material having a melting temperature in a range of about 60 °C to 100 °C.

The foam material may be or may comprise or may consist of at least one of expanded graphite, an organic foaming agent, and an inorganic foaming agent. The organic foaming agent may be or may comprise or may consist of at least one of azodicarbonamide, dinitropentamethylenetetramine, and oxybis(benzenesulfonyl hydrazide). The inorganic foaming agent may be or may comprise or may consist of at least one of hydrogen carbonate, carbonate, and salts of organic acids.

The flame retardant material may be or may comprise or may consist of at least one of polyurethane, polyvinyl chloride, and a polymer in which a flame retardant is dispersed.

The thickness of the expansion layer may be in a range of about 1% to 30% of the total thickness of the insulation member.

Upon expansion of the expansion layer, the expansion layer may leak out of a side surface of the insulation member to form an outflow portion, and the length of the outflow portion from the side surface of the insulation member may be in a range of about 500% to 3000% of the thickness of the expansion layer.

The battery module may include an empty space in addition to a space in which the cells and the insulation member are disposed, the battery module may further include a coating layer formed so as to wrap the side surface of the insulation member in the empty space formed in a lower part of the battery module, and the coating layer may include a flexible polymer.

The flexible polymer may be or may comprise or may consist of at least one of a fluorinated polymer, a polyurethane-based polymer, a polyolefin-based polymer, and a silicone-based polymer.

Another aspect of the disclosure refers to a method of manufacturing a battery module. The method comprises the steps of manufacturing an insulation member and disposing the insulation member between a plurality of cells such that an upper surface and a lower surface of the insulation member are disposed so as to face cells adjacent thereto, respectively, wherein the insulation member includes a first insulation sheet, a second insulation sheet, and an expansion layer formed between the first insulation sheet and the second insulation sheet.

A further aspect of the disclosure refers to a battery pack including the battery module.

### BRIEF DESCRIPTION OF THE DRAWINGS

When the terms "about" or "substantially" are used in this specification in connection with a numerical value, it is intended that the associated numerical value include a tolerance of ±10% around the stated numerical value. Moreover, when reference is made to percentages in this specification, it is intended that those percentages are based on weight, i.e., weight percentages. The expression "up to" includes amounts of zero to the expressed upper limit and all values therebetween. When ranges are specified, the range includes all values therebetween such as increments of 0.1%.

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIG. 1 is a schematic view showing the structure of a battery module according to an example embodiment;
FIG. 2 is a schematic view showing an expansion layer in the battery module according to the example embodiment of FIG. 1 after expansion;
FIG. 3 is a schematic view showing the sectional structure of an insulation member according to an example embodiment; and
FIG. 4 is a schematic view showing the structure of a battery module according to another example embodiment.

### DETAILED DESCRIPTION OF EXEMPLARY EMBODIMENTS

Hereinafter, example embodiments will be described in detail such that a person having ordinary skill in the art can easily implement the example embodiments. However, example embodiments may be implemented in many different forms and are not limited to the example embodiments described herein.

A battery module according to an example embodiment may include a plurality of cells and an insulation member provided between the plurality of cells, the insulation member having an upper surface and a lower surface facing cells adjacent thereto, respectively, wherein the insulation member may include a first insulation sheet, a second insulation sheet, and an expansion layer between the first insulation sheet and the second insulation sheet.

The battery module having the above structure may have desired, improved or advantageous thermal insulation, fire resistance, and flame retardancy or non-flammability, thereby reducing or inhibiting propagation of heat and flames in a cell to cells adjacent thereto due to thermal runaway of the cell. The insulation sheet may have desired, improved or advantageous compressibility, mechanical strength, and dimensional stability, and may reduce or prevent detachment of an aerogel layer due to external impact, thereby improving workability and reducing or preventing contamination of an instrument.

In an example embodiment, the cell may be a secondary battery cell. The secondary battery cell may be, for example, a lithium secondary battery. The lithium secondary battery may be manufactured in various forms, such as a lithium ion battery, an all-solid-state battery, or a lithium metal battery. For example, the lithium secondary battery may have a structure in which a positive electrode plate having a positive electrode active material applied thereto and a negative electrode plate having a negative electrode active material applied thereto are such that a separator is interposed therebetween, and the lithium secondary battery may be received in a battery case together with an electrolytic solution in a sealed state to constitute a secondary battery cell. Depending on the shape of the battery case, the secondary battery cell may be classified as a cylindrical secondary battery cell, a prismatic secondary battery cell, or a pouch-shaped secondary battery cell, and a plurality of secondary battery cells may be connected to each other in series or in parallel to constitute a battery module.

The secondary battery cell may require a high degree of stability, e.g., when overcharged, the positive electrode active material or an electrolyte may be subjected to decomposition and other side reactions, whereby heat may be emitted from the secondary battery, resulting in explosion of the secondary battery cell.

In a battery module according to an example embodiment, an insulation member including a first insulation sheet, a second insulation sheet, and an expansion layer between the first insulation sheet and the second insulation sheet may be located between cells, whereby the battery module may have desired, improved or advantageous thermal insulation, fire resistance, and flame retardancy or non-flammability, and therefore it is possible to reduce or inhibit propagation of heat and flames in a cell to cells adjacent thereto due to thermal runaway of the cell.

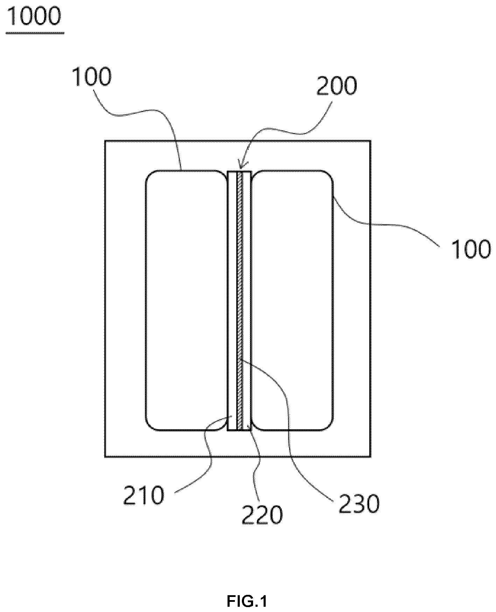

FIG. 1 is a schematic view showing a battery module having an insulation member between a plurality of cells, according to an example embodiment.

Referring to FIG. 1, a battery module 1000 according to an example embodiment may include a plurality of cells 100, and may include an insulation member 200 between the plurality of cells 100. The insulation member 200 may include a first insulation sheet 210, a second insulation sheet 220, and an expansion layer 230 between the first insulation sheet 210 and the second insulation sheet 220. Thus, it is possible to provide a battery module with increased safety by hindering or blocking flames in advance in the event of thermal runaway of one cell to substantially inhibit propagation of the flames to other cells, and further to provide a secondary battery pack including the battery module.

The insulation member may include an upper surface, a lower surface, and a border side surface between the upper surface and the lower surface. When the upper surface and the lower surface of the insulation member face cells adjacent thereto, respectively, the border side surface of the insulation member may include an upper side surface part, a lower side surface part, a front side surface part, and a rear side surface part.

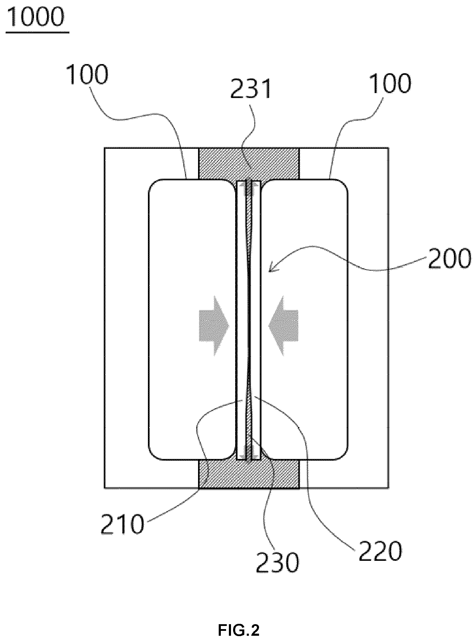

FIG. 2 is a schematic view showing that the expansion layer expands at a given temperature or higher and leaks out of upper and lower side surfaces of the insulation member.

Referring to FIG. 2, a battery module 1000 according to an example embodiment may include a plurality of cells 100, and may include an insulation member 200 between the plurality of cells 100, wherein the insulation member 200 may include a first insulation sheet 210, a second insulation sheet 220, and an expansion layer 230 between the first insulation sheet 210 and the second insulation sheet 220. When the ambient temperature increases to a given temperature or higher due to thermal runaway, the expansion layer 230 may expand, and the plurality of cells 100 formed at opposite sides of the insulation member 200 may also expand, whereby the expansion layer 230 may leak out of the upper and lower side surfaces of the insulation member 200 to form an outflow portion 231, which may fill an empty space in the battery module 1000 to reduce or prevent flame propagation.

In an example embodiment, each, or one or more, of the first insulation sheet and the second insulation sheet may include a substrate, and an aerogel layer on the substrate. The substrates of the first insulation sheet and the second insulation sheet may face the cells adjacent thereto, and the aerogel layer may face the expansion layer.

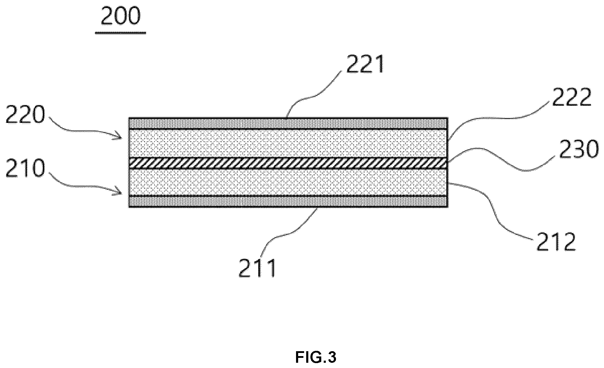

FIG. 3 is a schematic view showing the structure of an insulation member according to an example embodiment

Referring to FIG. 3, the first insulation sheet 210 may include a first substrate 211, and a first aerogel layer 212 formed on the first substrate 211. The second insulation sheet 220 may include a second substrate 221 and a second aerogel layer 222 formed on the second substrate 221. The first substrate 211 and the second substrate 221 may be disposed so as to face cells adjacent thereto, respectively, and each of the first aerogel layer 212 and the second aerogel layer 222 may be disposed so as to face the expansion layer 230 therebetween to constitute the insulation member 200. When the insulation member having the above structure is included, the expansion layer may be diffused into the empty space in the battery module and may fill the empty space in the event of thermal runaway, whereby flame propagation to the empty space may be reduced or prevented.

Even if "first" or "second" is not described, the insulation sheet may refer to a first insulation sheet, a second insulation sheet, or both a first insulation sheet and a second insulation sheet, the substrate may refer to a first substrate, a second substrate, or both a first substrate and a second substrate, and the aerogel layer may refer to a first aerogel layer, a second aerogel layer, or both a first aerogel layer and a second aerogel layer.

Each, or one or more, of the substrates 211 and 221 of the first insulation sheet 210 and the second insulation sheet 220, i.e. the first substrate 211 and the second substrate 221, may be made of or include at least one of, without being limited to, a resin, a metal, an inorganic material other than the metal, or may be made of or include a composite thereof. The form of the substrate may be or include, without being limited to, a film, a membrane, a sheet, etc.

The resin may be or include at least one of, for example, polyethylene, polypropylene, polystyrene, polyethylene terephthalate, and polyamide.

The metal may be or include at least one of, for example, copper, nickel, cobalt, iron, chromium, vanadium, palladium, ruthenium, rhodium, molybdenum, tungsten, iridium, silver, gold, and platinum. When a substrate made of or including the above metal is used, the substrate may be subjected to anti-corrosion treatment or insulating treatment as needed.

The inorganic material may be or include at least one of calcium carbonate (CaCO₃), talc, and mica.

As an example, the substrate may include an inorganic material, and as another example, the substrate may include mica. In this case, thermal insulation, durability, etc. of the insulation sheet may be improved.

Each, or one or more, of the aerogel layers of the first insulation sheet and the second insulation sheet, i.e., the first aerogel layer and the second aerogel layer, may include an aerogel, a fibrous support, and a functional material including a binder, a dispersant, or a combination thereof.

The aerogel may have a BET specific surface area in a range of about 500 m²/g to 1,000 m²/g. For example, the aerogel may have a BET specific surface area in a range of about 500 m²/g to 950 m²/g, 550 m²/g to 950 m²/g, or 600 m²/g to 900 m²/g. Because the aerogel having the BET specific surface area value within the above range is included, scattering of aerogel particles may be reduced or prevented and thermal insulation may be improved.

The particle size of the aerogel may be in a range of about 5 µm to 200 µm, 10 µm to 100 µm, or 20 µm to 60 µm. Because the aerogel having the particle size within the above range is included, thermal insulation may be improved, whereby heat transfer between the plurality of cells may be delayed.

The content of the aerogel may be in a range of about 10 wt% to 90 wt%, 30 wt% to 70 wt%, or 40 wt% to 60 wt%, based on the total amount of the aerogel layer. When the aerogel within the above range is included, thermal insulation of the insulation sheet may be desired, improved or advantageous.

The aerogel, which is a transparent or translucent advanced material having a nanoporous structure, exhibits substantially low density and low thermal conductivity, and therefore aerogel has a significant potential as an insulating material and is considered to be a highly efficient super insulating material that can be used in a variety of industrial applications.

A significant advantage of the aerogel of the example embodiments is that the aerogel has a lower thermal conductivity than conventional organic insulating materials such as, e.g., Styrofoam, and that the aerogel is capable of solving or overcoming critical weaknesses of organic insulating materials, such as fire vulnerability and generation of harmful gases in the event of fire. In various instances, the aerogel may be substantially brittle, readily breakable upon slight impact, and challenging to process into small thicknesses and shapes, making it challenging to manufacture an insulation material using the aerogel alone despite desired and advantageous thermal insulation. In an example embodiment, a fibrous support and a functional material including a binder, dispersant, or a combination thereof may be included to improve the durability of the aerogel layer and to reduce or prevent dust from being generated during external impact or operation.

The fibrous support may be included in the aerogel layer, whereby durability of the insulation sheet formed using the same may be improved.

The fibrous support may include fiber used as a support made of or including an ordinary insulating material. For example, the fibrous support may be or include at least one of natural fiber, silica fiber, glass fiber, carbon fiber, graphite fiber, mineral fiber, and polymer fiber. As an example, the fibrous support may include, without being not limited to, glass fiber.

The natural fiber may be or include at least one of, for example, hemp, jute, flax, coir, Kenaf, and cellulose.

The mineral fiber may be or include at least one of, for example, basalt, quartzite, alumina, silica, slag, and rock.

The polymer fiber may be or include at least one of, for example, nylon, polyimide, polyamide, polybenzimidazole, polybenzoxazole, polyamideimide, polyethylene terephthalate, polybutylene terephthalate, polyester, polyethylene (PE), and polypropylene (PP). As an example, the polymer fiber may be or include at least one of, without being limited to, polyimide, polyamide, and polybenzimidazole.

The fibrous support may be, for example, in the form of wool or chopped strands, but is not limited thereto.

The diameter of the fibrous support may be, for example, in a range of about 0.1 µm to 20 µm, 0.1 µm to 15 µm, 0.1 µm to 5 µm, 1 µm to 15 µm, or 3 µm to 10 µm. By including a fibrous support having a diameter within the above range, the structure of the aerogel layer may be stiffened and manufacturing costs may be reduced.

The content of the fibrous support may be in a range of about 5 wt% to 70 wt%, 25 wt% to 60 wt%, or 30 wt% to 50 wt%, based on the total amount of the aerogel layer. When an insulation sheet is manufactured using an aerogel layer including a fibrous support within the above range, durability may be improved.

The binder may include an aqueous polymer binder. For example, the aqueous polymer binder may be or include at least one of a water-based polymer, an anionic water-soluble polymer, a cationic water-soluble polymer, and a water-dispersible polymer.

The water-based polymer may be or include at least one of, for example, without being limited to, polyvinyl alcohol, polyethylene oxide, polyacrylamide, and polyvinylpyrrolidone.

The anionic water-soluble polymer may be or include at least one of carboxylic acid, sulfonic acid, sulfuric acid ester, phosphoric acid ester, and a polymer having functional groups of salts thereof. For example, the anionic water-soluble polymer may be or include a polymer having a carboxylic acid group, and may include, without being limited to, polymaleic acid as an example.

The cationic water-soluble polymer may be or include at least one of amine, ammonium, phosphonium, sulfonium, and a polymer having functional groups of salts thereof. For example, the cationic water-soluble polymer may be or include a polymer having an amine group, and may be or include at least one of, without being limited to, polyethylene amine and polyamine as an example.

The water-dispersible polymer may be or include, without being limited to, at least one of water-dispersible polyurethane and water-dispersible polyester.

The binder may include a water-based polymer and a water-dispersible polymer. For example, the binder may include a water-based polymer having binder properties and dispersing properties and water-dispersible polyurethane having fire-resistant properties. As an example, the binder may include polyvinyl alcohol and water-dispersible polyurethane.

The weight ratio of the water-based polymer to the water-dispersible polymer may be in a range of about 1:1 to 1:5, 1:1 to 1:4, or 1:2 to 1:3. When the weight ratio of the water-based polymer to the water-dispersible polymer is within the above range, fire resistance and mechanical properties of the insulation sheet may be further improved in addition to the thermal insulation, dustiness, and compression properties of the insulation sheet.

The content of the binder may be in a range of about 0.5 wt% to 20 wt%, 2 wt% to 15 wt%, or 8 wt% to 15 wt%, based on the total amount of the aerogel layer. An insulation sheet including an aerogel layer including a binder within the above range may have improved dustiness.

The dispersant may be or include at least one of a surfactant, a silane coupling agent, and a phosphate-based salt. For example, the dispersant may include at least one of, without being limited to, a non-ionic surfactant, an anionic surfactant, an amphoteric surfactant, a natural surfactant such as lecithin, and phosphate.

Further inclusion of the dispersant may further improve the dispersion of the aerogel during manufacture of the aerogel layer, resulting in even dispersion of the fibrous support and the aerogel.

The content of the dispersant may be in a range of about 0.1 wt% to 6 wt%, 0.1 wt% to 5 wt%, or 0.1 wt% to 3 wt%, based on the total amount of the aerogel layer. When the dispersant is included within the above range, it is possible to manufacture the aerogel layer at low cost and to manufacture an insulation sheet having desired, improved or advantageous thermal insulation, uniformity, and dustiness using the same.

In an example embodiment, the binder and the dispersant may be included in a weight ratio in a range of about 1:0.001 to 1:0.67, 1:0.001 to 1:0.5, or 1:0.001 to 1:0.3. Mixing the binder and the dispersant in a weight ratio within the above range may result in more uniform dispersion of the aerogel in the aerogel layer.

In an example embodiment, the fibrous support may be included so as to account for a range of about 25 wt% to 60 wt%, the aerogel may be included so as to account for a range of about 30 wt% to 70 wt%, and the binder may be included so as to account for a range of about 2 wt% to 15 wt%, based on the total amount of the aerogel layer.

As an example, the fibrous support may be included so as to account for a range of about 30 wt% to 50 wt%, the aerogel may be included so as to account for a range of about 40 wt% to 60 wt%, and the binder may be included so as to account for a range of about 8 wt% to 15 wt%, based on the total amount of the aerogel layer. When the aerogel layer is formed within the above range, it is possible to realize desired, improved or advantageous thermal insulation while improving durability, and it is possible to improve the binding between the fibrous support and the aerogel, thereby reducing or preventing dust generation.

In an example embodiment, the fibrous support may be included so as to account for a range of about 25 wt% to 60 wt%, the aerogel may be included so as to account for a range of about 30 wt% to 70 wt%, the binder may be included so as to account for a range of about 2 wt% to 15 wt%, and the dispersant may be included so as to account for a range of about 0.1 wt% to 3 wt%, based on the total amount of the aerogel layer.

As an example, the fibrous support may be included so as to account for a range of about 30 wt% to 50 wt%, the aerogel may be included so as to account for a range of about 40 wt% to 60 wt%, the binder may be included so as to account for a range of about 5 wt% to 10 wt%, and the dispersant may be included so as to account for a range of about 0.1 wt% to 2 wt%, based on the total amount of the aerogel layer. When the aerogel layer is formed within the above range, it is possible to realize desired, improved or advantageous thermal insulation while improving durability, and it is possible to improve the binding between the fibrous support and the aerogel, thereby reducing or preventing dust generation.

In an example embodiment, the expansion layer may be made of or include at least one of a foam material that foams when the ambient temperature increases to a range of about 100 °C to 200 °C and a flame retardant material having a melting temperature in a range of about 60 °C to 100 °C.

The foam material may not be particularly restricted as long as the foam material foams and expands in volume when the ambient temperature increases to a range of about 100 °C to 200 °C, 120 °C to 180 °C, or 120 °C to 170 °C. For example, the foam material may include a foaming agent including at least one of expanded graphite, an organic foaming agent, and an inorganic foaming agent. As an example, the organic foaming agent may be at least one of azodicarbonamide, dinitropentamethylenetetramine, and oxybis(benzenesulfonyl hydrazide), and the inorganic foaming agent may be at least one of hydrogen carbonate, carbonate, and salts of organic acids.

The foam material may be mixed with a polymer material to form a coating solution. The polymer material may not be particularly restricted as long as the polymer material can control the thickness of the expansion layer after expansion and the foam trigger temperature of the foam material. For example, the polymer material may be or include at least one of polyimide, polyamide, polybenzimidazole, polybenzoxazole, polyamideimide, polyurethane, polyethylene terephthalate, polybuthylene terephthalate, polyester, polyethylene (PE), and polypropylene (PP).

The coating solution including the foam material and the polymer material may foam and expand in volume when the ambient temperature increases, for example, to a range of about 100 °C to 200 °C, 120 °C to 180 °C, or 120 °C to 170 °C.

The foam material and the polymer material may form the coating solution in a weight ratio in a range of about 1:9 to 5:5, 1:9 to 4:6, or 1:9 to 3:7.

The flame retardant material may not be particularly restricted as long as the flame retardant material has a melting temperature in a range of about 60 °C to 100 °C or 80 °C to 100 °C. For example, the flame retardant material may be or include at least one of polyurethane, polyvinyl chloride, and a polymer in which a flame retardant is dispersed. The flame retardant may include any of the types of flame retardants described below.

When the expansion layer is formed using the foam material and the flame retardant material, the expansion layer may leak, for example rapidly leak, upward and downward through the border side surface of the insulation member under given temperature conditions, thereby filling the empty space in the battery module and reducing or preventing the propagation of flames. "Upward" and "downward" herein may mean upward and downward directions based on the form in which the insulation member is disposed.

The expansion layer may be formed so as to account for a range of about 1% to 30%, 5% to 25%, or 10% to 17%, based on the total thickness of the insulation member. By forming an expansion layer having a thickness within the above range, it is possible to effectively reduce or prevent the propagation of flames in the event of thermal runaway of one cell.

The expansion layer may expand and leak through the side surface of the insulation member under given temperature conditions. The length of the outflow portion formed by leakage of the expansion layer from the side surface of the insulation member may be in a range of about 500% to 3000%, 1000% to 2500%, or 1300% to 2000% of the thickness of the expansion layer before expansion. The expansion layer may expand when the ambient temperature rises to a given level, whereby the length of the outflow portion after expansion may be about 5 times to 30 times, 10 times to 25 times, or 13 times to 20 times greater than the thickness of the expansion layer before expansion.

The battery module may include an empty space therein in addition to the space in which the cells and the insulation member are located, and the length of the outflow portion may be in a range of at least 200%, 200% to 500%, or 200% to 400% of the height of the empty space formed in an upper part of the battery module. The length of the outflow portion may be at least twice, two to five times, or two to four times of the height of the empty space formed in the upper part of the battery module.

In an example embodiment, the battery module may include an empty space other than the space in which the cells and the insulation member are located, and may further include a coating layer configured to wrap the side surface of the insulation member in the empty space formed in the lower part of the battery module, wherein the coating layer may include a flexible polymer. By forming the coating layer, the expansion layer between the first insulation sheet and the second insulation sheet may substantially leak upward during thermal runaway, whereby upward movement of flames may be effectively reduced or prevented.

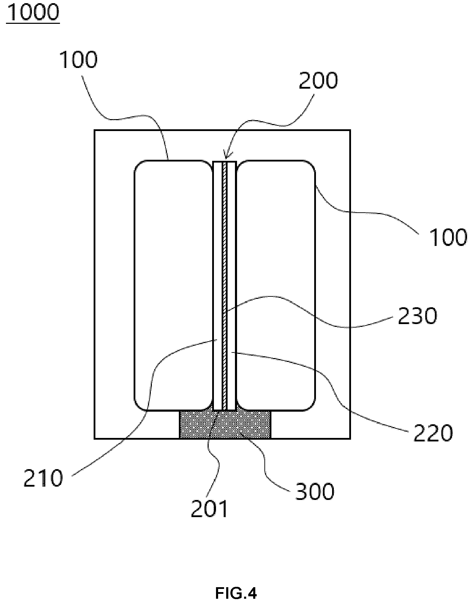

FIG. 4 is a schematic view showing a battery module including a coating layer configured to wrap the side surface of the insulation member in the empty space formed in the lower part of the battery module, in accordance with an example embodiment.

Referring to FIG. 4, a battery module 1000 according to an example embodiment may include a plurality of cells 100, and may include an insulation member 200 between the plurality of cells 100. The insulation member 200 may include a first insulation sheet 210, a second insulation sheet 220, and an expansion layer 230 between the first insulation sheet 210 and the second insulation sheet 220. A coating layer 300 configured to wrap the side surface 201 of the insulation member 200 in the empty space formed in the lower part of the battery module 1000 may be included. Thus, the expansion layer 230 may effectively leak upward during thermal runaway in one cell, thereby effectively reducing or blocking upward movement of flames and hindering or inhibiting propagation of the flame to other cells.

The flexible polymer may not be particularly restricted as long as the polymer is flexible. For example, the flexible polymer may be or include at least one of a fluorinated polymer, a polyurethane-based polymer, a polyolefin-based polymer, and a silicone-based polymer.

The fluorinated polymer may be or include at least one of, for example, polytetrafluoroethylene (PTFE), perfluoroalkoxyethylene (PFA), fluoroethylenepropylene (FEP), ethylene-tetrafluoroethylene (ETFE), polyvinylidene fluoride (PVDF) and polychlorotrifluoroethylene (PCTFE). The fluorinated polymer may be or include a material that is flexible and inherently a flame retardant.

The polyurethane-based polymer may not be particularly restricted as long as the polyurethane-based polymer is ordinary polyurethane manufactured by polymerization of polyol and polyisocyanate. Polyol may be or include ordinary polyol used, for example, in the manufacture of polyurethane, and may be or include at least one of polyether polyol, polyester polyol, polyamide polyol, polyesteramide polyol, polythioether polyol, polycarbonate polyol, polyacetal polyol, polyolefin polyol, polysiloxane polyol, acrylic polyol, and silicone polyol. Polyisocyanate may include ordinary polyisocyanate used, for example, in the manufacture of polyurethane, and may be or include at least one of toluene diisocyanate, isophorone diisocyanate, cyclohexane-1.4-diisocyanate, 4,4-dicyclohexylmethane diisocyanate, 4,4-di(aminocyclohexyl)methane hexamethylene diisocyanate, 1,4-phenylene diisocyanate, 4,4-diphenylmethane diisocyanate, 1,5-naphthalene diisocyanate, trimethylhexamethylenediisocyanate, and norbornane diisocyanate.

The polyolefin-based polymer may be or include at least one of, for example, polyethylene, polypropylene, polybutylene, polypentene, polyvinylidene fluoride, and polymethylmethacrylate.

The silicone-based polymer may be or include at least one of, for example, polydimethylsiloxane, polymethylethylsiloxane, polydiethylsiloxane, polymethylphenylsiloxane, polydiphenylsiloxane, and polyethylphenylsiloxane.

The coating layer may further include a flame retardant. The type of the flame retardant is not particularly restricted, and the flame retardant may be, for example, at least one of an inorganic flame retardant, a phosphorus-based flame retardant, a nitrogen compound-based flame retardant, a silicone-based flame retardant, a melamine-based flame retardant, and a halogen-based flame retardant.

The inorganic flame retardant may include a metal oxide, a metal hydroxide, or a combination thereof. For example, the inorganic flame retardant may be or include at least one of, without being limited to, silicon oxide, magnesium hydroxide, aluminum hydroxide, antimony oxide, sodium carbonate, zinc oxide, iron oxide, tin oxide, zinc borate, and calcium borate.

The phosphorus-based flame retardant may include an ordinary phosphorus-containing flame retardant. For example, the phosphorus-based flame retardant may be or include at least one of, without being limited to, phosphate, phosphonate, phosphinate, phosphine oxide, phosphazene, and ammonium salts thereof.

The phosphorus-based flame retardant may include two or more hydroxyl groups at the end of a functional group. As an example, the phosphorus-based flame retardant may include ammonium polyphosphate having a multifunctional hydroxyl group. The use of a phosphorus-based flame retardant having a multifunctional hydroxyl group may provide desired, improved or advantageous flame retardancy.

The nitrogen compound-based flame retardant may be or include at least one of, without being limited to, an aliphatic amine compound, an aromatic amine compound, a nitrogenous bicyclic compound, a cyanide compound, an aliphatic amide, an aromatic amide, urea, and thio-urea.

The silicone-based flame retardant may include a silicone resin, a silicone oil, or a combination thereof. The silicone resin may include a resin having the structure of RSiO, where R may indicate an alkyl group of carbon number 1 to 10, such as a methyl group, an ethyl group, or a propyl group, an aromatic group, or a substituent in which at least one of hydrogens of the alkyl group and the aromatic group is substituted with a vinyl group. The silicone oil may be or include at least one of, without being limited to, polydimethylsiloxane and modified polydimethylsiloxane in which at least one methyl group of the side chain or terminal of polydimethylsiloxane is modified by at least one of hydrogen, an alkyl group, a cyclohexyl group, a phenyl group, a benzyl group, an epoxy group, a polyether group, a carboxyl group, a mercapto group, a chloroalkyl group, an alkyl alcohol ester group, an alcohol group, an allyl group, a vinyl group, and a trifluoromethyl group.

The melamine-based flame retardant may be or include at least one of, without being limited to, melamine phosphate, dimelamine phosphate, melamine pyrophosphate, and melamine cyanurate.

Any halogen-based compound capable of serving as a flame retardant may be used as the halogen-based flame retardant without limitation. For example, the halogen-based flame retardant may be at least one of, without being limited to, decabromo diphenyl ether, decabromo diphenyl ethane, tetrabromo bisphenol-A, tetrabromo bisphenol-A epoxy oligomer, octabromo trimethylphenyl indane, ethylene-bis-tetrabromophthalimide, tris(tribromophenol)triazine, and polystyrene bromide.

The content of the flame retardant may be in a range of about 1 wt% to 10 wt%, 2 wt% to 8 wt%, or 3 wt% to 6 wt%, based on the total amount of the coating layer. By forming a coating layer including a flame retardant within the above range, it is possible to reduce or prevent the generation of dust from the aerogel and improve flame retardancy or non-flammability of the insulation member.

A method of manufacturing a battery module according to an example embodiment may include manufacturing an insulation member and disposing the insulation member between a plurality of cells such that an upper surface and a lower surface of the insulation member are disposed so as to face cells adjacent thereto, respectively, wherein the insulation member may include a first insulation sheet, a second insulation sheet, and an expansion layer formed between the first insulation sheet and the second insulation sheet.

In an example embodiment, manufacturing the insulation member may include manufacturing a first insulation sheet, manufacturing a second insulation sheet, and laminating an expansion layer between the first insulation sheet and the second insulation sheet.

Manufacturing the first insulation sheet may include forming a first substrate and applying an aerogel composition to the first substrate to form a first aerogel layer.

Manufacturing the second insulation sheet may include forming a second substrate and applying an aerogel composition to the second substrate to form a second aerogel layer.

A detailed description of each of the first substrate and the second substrate may be similar to, or the same as described above, and the size and shape of each substrate may be appropriately adjusted depending on the structure of the cell.

The aerogel composition may be manufactured through mixing a solvent with a functional material including a binder, a dispersant, or a combination thereof to manufacture a solvent mixture, mixing the solvent mixture with an aerogel to manufacture an aerogel mixture, and mixing the aerogel mixture with a fibrous support to manufacture an aerogel composition. A first aerogel layer, a second aerogel layer, or a first aerogel layer and a second aerogel layer may be formed therefrom.

In mixing the solvent with the functional material to manufacture the solvent mixture, the solvent may be mixed with the binder, or the solvent may be mixed with the binder and the dispersant.

The solvent may be or include at least one of a polar solvent and a non-polar solvent.

The polar solvent may be or include at least one of water and an alcohol-based solvent.

Water may be or include at least one of, for example, purified water and deionized water.

The alcohol-based solvent may be or include at least one of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may be or include at least one of hexane, pentane, heptane, toluene, and benzene, and may be, without being limited to, an alkane solvent such as hexane or a mixture including an alkane solvent.

The solvent may include water. The use of water as a solvent may effectively reduce raw material costs and post-processing costs. When water is used as a solvent, however, water may not readily mix with the aerogel, which is hydrophobic. In an example embodiment, the aerogel may be dispersed evenly by controlling the design of a mixing process, the mixing conditions, the addition of the binder and the dispersant, and the amount of the binder and the dispersant. This substantially even dispersion of the aerogel in the composition may enable the formation of an aerogel layer having desired, improved or advantageous thermal insulation, durability, and dustiness at a low thickness without the use of a large amount of binder.

The solvent may be included such that the weight ratio of the solvent to the total amount of solids in the aerogel composition is in a range of about 1:1 to 1:90. For example, the weight ratio of the solvent to the total amount of solids in the aerogel composition may be in a range of about 1:50 to 1:70, 1:20 to 1:30, or 1:2 to 1:10. By controlling the weight ratio of the solvent to the total amount of solids in the aerogel composition within the above range, dispersibility, coatability, and phase stability may be compatible.

A detailed description of the binder and the dispersant may be similar to, or the same as described above.

In mixing the solvent mixture with aerogel to manufacture the aerogel mixture, a detailed description of the aerogel may be similar to, or the same as described above.

In mixing the aerogel mixture with the fibrous support to manufacture the aerogel composition, a detailed description of the fibrous support may be similar to, or the same as described above.

In each, or one or more, mixing of the solvent with the functional material including the binder, the dispersant, or the combination thereof to manufacture the solvent mixture, mixing the solvent mixture with the aerogel to manufacture the aerogel composition, and mixing the aerogel mixture with the fibrous support to manufacture the aerogel composition, the mixing may be performed using a mixer. For example, the mixer may include, without being limited to, a planetary mixer, a planetary Despa^{™} (PD) mixer, a Thinky^{™} mixer, and a C-mixer.

As an example, the planetary mixer may be used to mix the solvent mixture with the aerogel. The use of the planetary mixer to mix the solvent mixture with the aerogel may allow the aerogel to be substantially uniformly dispersed in the solvent.

The planetary mixer may be a device that may be used to mix or stir different substances in order to produce a homogeneous mixture. The planetary mixer may include a blade capable of performing planetary motion.

In an example embodiment, the planetary mixer may include at least one of one or more planetary blades and one or more high-speed dispersing blades. As an example, the planetary mixer may include at least one planetary blade and at least one high-speed dispersing blade.

Each, or one or more, of the planetary blade and the high-speed dispersing blade may continuously rotate about an axis thereof. The rotation speed may be expressed in rotations per minute (rpm).

In an example embodiment, the planetary mixer may include a first blade and a second blade having different axes of rotation. For example, the first blade may be a low speed blade, and the second blade may be a high speed blade. The low speed and the high speed refer to relative rotational speeds between the first blade and the second blade. As an example, the first blade may be an open blade, and the second blade may be a Despa^{™} blade.

The rotational speed of the first blade may be, for example, in a range of about 10 rpm to 100 rpm, 10 rpm to 60 rpm, or 30 rpm to 70 rpm. The rotational speed of the second blade may be, for example, in a range of about 100 rpm to 2000 rpm, 100 rpm to 1000 rpm, 300 rpm to 1700 rpm, or 500 rpm to 1700 rpm.

When the functional material is added to and mixed with the solvent, the rotational speed of the first blade may be in a range of about 10 rpm to 60 rpm, 20 rpm to 50 rpm, or 30 rpm to 40 rpm, and the rotational speed of the second blade may be in a range of about 300 rpm to 1700 rpm, 600 rpm to 1000 rpm, or 700 rpm to 800 rpm. When the solvent and the functional material are mixed with each other, as described above, the solvent mixture in which the binder, the dispersant, or the combination thereof is substantially uniformly dispersed may be manufactured to facilitate mixing of the aerogel in a subsequent process.

When the solvent mixture and aerogel powder are mixed with each other, the rotational speed of the first blade of the mixer may be in a range of about 30 rpm to 70 rpm, 40 rpm to 70 rpm, or 60 rpm to 70 rpm, and the rotational speed of the second blade may be in a range of about 500 rpm to 1700 rpm, 600 rpm to 1600 rpm, or 800 rpm to 1500 rpm. When the aerogel powder is added to and mixed with the solvent mixture, as described above, the aerogel powder may be hindered or prevented from clumping together to induce uniform dispersion.

When the aerogel mixture and the fibrous support are mixed with each other, the rotational speed of the first blade of the mixer may be in a range of about 10 rpm to 60 rpm, 20 rpm to 50 rpm, or 30 rpm to 40 rpm, and the rotational speed of the second blade may be in a range of about 300 rpm to 1700 rpm, 400 rpm to 1500 rpm, or 800 rpm to 1200 rpm. Mixing the aerogel mixture with the fibrous support as described above may remove air bubbles in the composition, control the viscosity, and facilitate dispersion of the fibrous support in the substantially evenly dispersed aerogel, such that the aerogel surrounds the periphery of the fibrous support in the composition. A binder may be present between the aerogel and the fibrous support to improve the binding between the aerogel and the fibrous support.

By forming the aerogel layer using the method according to the example embodiment, thermal insulation and durability may be improved, and the aerogel may be hindered or prevented from falling off and creating dust when the insulation member is manufactured or installed in an apparatus, or when external vibration occurs.

In an example embodiment, in forming and laminating the expansion layer between the first insulation sheet and the second insulation sheet, the first aerogel layer of the first insulation sheet and the second aerogel layer of the second insulation sheet may be located opposite to each other, and the expansion layer may be formed between the first aerogel layer and the second aerogel layer.

The expansion layer may be formed using, e.g., a coating method, a casting method, or the like. The insulation member may be manufactured by forming the expansion layer on the first aerogel layer of the first insulation sheet by coating and laminating the second aerogel layer of the second insulation sheet on the expansion layer such that the second aerogel layer and the expansion layer face each other, and attaching or joining the second aerogel layer and the expansion layer to each other.

In an example embodiment, in disposing the insulation member between the plurality of cells such that the upper surface and the lower surface of the insulation member face cells adjacent thereto, respectively, the manner of disposing the plurality of cells is not particularly restricted, and the plurality of cells may be appropriately disposed depending on the type of battery.

The insulation member may be disposed between the plurality of cells. The first substrate and the second substrate of the insulation member may form an upper surface and a lower surface, respectively, and the upper surface and the lower surface may face cells adjacent thereto, respectively.

An example embodiment may provide a battery pack including the battery module. A plurality of battery modules may be disposed in the battery pack.

Hereinafter, examples will be described. However, the following examples are intended only to illustrate or describe the disclosure and should not be construed as limiting the disclosure. Details that are not described herein may be sufficiently technically inferred by those skilled in the art, and therefore a description thereof will be omitted.

### (Manufacture of battery module)

### Example 1

### 1. Manufacture of insulation member

A solvent mixture was manufactured by adding polyvinyl alcohol (Sigma Aldrich), as a binder, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel mixture. An aerogel composition was manufactured by adding glass wool to the aerogel mixture and mixing the same at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of glass wool, and 10 wt% of the polyvinyl alcohol.

A slurry of the manufactured aerogel composition was applied to a 0.3 mm thick mica sheet (Famica^{™}, Muscovite^{™}) to manufacture an insulation sheet. Two insulation sheets were manufactured and used as a first insulation sheet and a second insulation sheet.

An insulation member was manufactured by placing aerogel composition-coated surfaces of the first insulation sheet and the second insulation sheet so as to be opposite each other and forming an expansion layer therebetween using a coating method with an aqueous pyrolyzable expansion coating solution (Lord, Sipiol FR220).

It was found that the total thickness of the manufactured insulation member was 3 mm and the thickness of the expansion layer was 0.3 mm.

### 2. Manufacture of battery module

A plurality of cells was disposed in a battery module, and the insulation member having the expansion layer was disposed between the plurality of cells.

### Example 2

A battery module was manufactured using the same method as in Example 1 with a difference that the thickness of the expansion layer was 0.1 mm.

### Example 3

A battery module was manufactured using the same method as in Example 1 with a difference that the thickness of the expansion layer was 0.5 mm.

### Example 4

A battery module was manufactured using the same method as in Example 1 with a difference that the thickness of the expansion layer was 0.8 mm.

### Example 5

A battery module was manufactured using the same method as in Example 1 with a difference that a foam coating solution including foam material (UNICELL-5PT, Dongjin Semichem) and polyimide (PHOTONEECE, Toray) mixed in a ratio of 2:8 was used.

### Comparative Example 1

A battery module was manufactured using the same method as in Example 1 with a difference that no expansion layer was formed.

### (Experimental Examples)

### Experimental Example 1: Evaluation of thermal insulation

Thermal insulation of each of the insulation members manufactured in Examples 1 to 5 and Comparative Example 1 was evaluated.

Each insulation sheet was put between a pair of opposing 1T thick aluminum plates and was placed on a heat press. An upper plate of the heat press was heated to 350 °C, and a lower plate of the heat press was not heated and was maintained at a starting temperature of 40 °C. Subsequently, a pressure of 20 kN was applied to the lower plate of the heat press, and the highest temperature of the lower plate of the heat press in 11 minutes was measured. The results are shown in Table 1 below.

### Experimental Example 2: Evaluation of compressibility

Compressibility of each of the insulation members manufactured in Examples 1 to 5 and Comparative Example 1 was evaluated.

The ratio of the thickness upon applying a load of 5 kN using universal testing machine (UTM) equipment to the thickness upon applying a load of 40 kN using UTM equipment was measured. The results are shown in Table 1 below.

### Experimental Example 3: Evaluation of expandability

### 1. Expansion temperature

The expansion temperature of the expansion layer of each of the insulation members manufactured in Examples 1 to 5 and Comparative Example 1 was measured. A hot plate was exposed at 50 °C intervals, and the temperature at which foaming was triggered measured as the expansion temperature. The results are shown in Table 1 below.

### 2. Length of outflow portion after expansion

The expansion performance of the expansion layer of each of the insulation members manufactured in Examples 1 to 5 and Comparative Example 1 was evaluated.

In UTM equipment, the temperature of an upper die was set to 800 °C, and a load of 1.3 MPa was applied to each insulation member for 1 minute to compress the insulation member. The expansion layer expanded and leaked out of the side surface of the insulation member. The average value of the lengths of an outflow portion formed by leakage of the expansion layer out of the side surface of the insulation member and the thickness of the insulation member after compression were measured. The results are shown in Table 1 below.

### Experimental Example 4: Evaluation of heat propagation

Flame propagation of each of the battery modules manufactured in Examples 1 to 5 and Comparative Example 1 was evaluated.

The heat propagation evaluation was performed using a 50Ah prismatic (NCM 811/Graphite) 2-cell simple module device having a gap of 1.5 mm between the top of each cell and an upper cover due to attachment of the upper cover under nail penetration conditions. The results are shown in Table 1 below.

**[Table 1]**

| | Example 1 | Example 2 | Example 3 | Example 4 | Example 5 | Comparative Example 1 |
|---|---|---|---|---|---|---|
| Thermal insulation (°C) | 75 | 73 | 80 | 92 | 75 | 70 |
| Compressibility (%) | 37 | 39 | 33 | 28 | 37 | 40 |
| Expansion temperature (°C) | 150 | 150 | 150 | 150 | 300 | - |
| Expansion layer thickness (mm) | 0.3 | 0.1 | 0.5 | 0.8 | 0.3 | - |
| Outflow portion length after 800°C compression (mm) | 3 | 1 | 4 | 5.5 | x | x |
| Insulation member thickness after 800°C compression (mm) | 1.1 | 1.2 | 0.9 | 0.6 | 1.4 | 1.4 |
| Heat propagation | No | Yes | No | Yes | Yes | Yes |

Referring to Table 1 above, it can be seen that in Examples 1 and 3, thermal insulation, compressibility, and heat propagation prevention properties are desired, improved or advantageous. In Example 2, it can be seen that the expansion layer was thinly formed and the amount of leakage was small, which resulted in some heat propagation. In Example 4, it can be seen that the expansion layer was thickly formed and the thickness of the insulation member was decreased after leakage, which resulted in heat propagation due to decreased insulation performance. In Example 5, it can be seen that the expansion temperature of the inner expansion layer was high and the amount of leakage was small compared to the heat transferred to the insulation sheet, which resulted in some heat propagation.

In Comparison Example 1, no expansion layer was included, and therefore heat propagation was not prevented.

As is apparent from the above description, a battery module according to an example embodiment may reduce or inhibit propagation of heat and flames in a cell to cells adjacent thereto due to thermal runaway of the cell.

The insulation sheet included in the battery module according to the example embodiment may have desired, improved or advantageous thermal insulation, compressibility, mechanical strength, and dimensional stability, whereby it is possible to reduce or prevent detachment of an aerogel layer due to external impact, to improve workability, and to reduce or prevent contamination of an instrument.

While the foregoing describes example embodiments, the disclosure is not limited thereto, and it is contemplated that various modifications may be made within the scope of the claims, the detailed description of example embodiments, and the accompanying drawings, which also fall within the scope of the disclosure.

## Claims

1. A battery module (1000) comprising:
a plurality of cells (100); and
an insulation member between the plurality of cells (100), the insulation member having an upper surface and a lower surface that face cells (100) adjacent thereto, respectively, wherein
the insulation member comprises a first insulation sheet (210), a second insulation sheet (220), and an expansion layer (230) formed between the first insulation sheet (210) and the second insulation sheet (220).

2. The battery module as claimed in claim 1, wherein each of the first insulation sheet(210) and the second insulation sheet (220)comprises a substrate (211,221) and an aerogel layer (212,222) formed on the substrate.

3. The battery module as claimed in claim 2, wherein
the substrates (211,221) of the first insulation sheet and the second insulation sheet face the cells (100) adjacent thereto, and
the aerogel layer (212,222) faces the expansion layer (230).

4. The battery module as claimed in claim 3, wherein at least one of the substrates (211,221) of the first insulation sheet and the second insulation sheet comprises at least one of a resin, a metal, an inorganic material other than the metal.

5. The battery module as claimed in one of claims 2 to 4, wherein at least one of the aerogel layers (212,222) of the first insulation sheet and the second insulation sheet comprises an aerogel, a fibrous support, and a functional material comprising a binder, a dispersant, or a combination thereof.

6. The battery module as claimed in claim 5, wherein the aerogel has a BET specific surface area in a range of 500 m²/g to 1,000 m²/g determined by the ISO 9277 standard.

7. The battery module as claimed in one of claims 5 and 6, wherein the fibrous support comprises at least one of natural fiber, silica fiber, glass fiber, carbon fiber, graphite fiber, mineral fiber, and polymer fiber.

8. The battery module as claimed in claim 5 to 7, wherein the binder comprises an aqueous polymer binder, and
the dispersant comprises at least one of a surfactant, a silane coupling agent, and a phosphate-based salt.

9. The battery module as claimed in claim 5 to 8, wherein the aerogel is included so as to account for 10 wt% to 90 wt%, the fibrous support is included so as to account for 5 wt% to 70 wt%, and the functional material is included so as to account for 0.5 wt% to 20 wt%, based on a total amount of the aerogel layer.

10. The battery module of one of the preceding claims, wherein the expansion layer comprises at least one of a foam material configured to foam at ambient temperature of 100 °C to 200 °C and a flame retardant material having a melting temperature of 60 °C to 100 °C, and
preferably, the flame retardant material comprises at least one of polyurethane, polyvinyl chloride, and a polymer in which a flame retardant is dispersed.

11. The battery module as claimed in claim 10, wherein
the foam material comprises at least one of expanded graphite, an organic foaming agent, and an inorganic foaming agent,
the organic foaming agent comprises at least one of azodicarbonamide, dinitropentamethylenetetramine, and oxybis(benzenesulfonyl hydrazide), and
the inorganic foaming agent comprises at least one of hydrogen carbonate, carbonate, and salts of organic acids.

12. The battery module as claimed in one of the preceding claims, wherein a thickness of the expansion layer is 1% to 30% of a total thickness of the insulation member.

13. The battery module as claimed in one of the preceding claims, wherein
the battery module comprises an empty space in addition to a space in which the cells and the insulation member are located,
the battery module further comprises a coating layer (300) configured to wrap a side surface of the insulation member in the empty space formed in a lower part of the battery module, and
the coating layer (300) comprises a flexible polymer,
preferably, the flexible polymer comprises at least one of a fluorinated polymer, a polyurethane-based polymer, a polyolefin-based polymer, and a silicone-based polymer.

14. A method of manufacturing a battery module, the method comprising:
manufacturing an insulation member; and
disposing the insulation member between a plurality of cells such that an upper surface and a lower surface of the insulation member are disposed so as to face cells adjacent thereto, respectively, wherein
the insulation member includes a first insulation sheet, a second insulation sheet, and an expansion layer formed between the first insulation sheet and the second insulation sheet.

15. A battery pack comprising the battery module (1000) as claimed in any one of claims 1 to 13.
